(19)

Europäisches
Patentamt
European
Patent Office
Office européen
des brevets

(11) **EP 2 452 443 B1**

(12) **EUROPEAN PATENT SPECIFICATION**

(45) Date of publication and mention
of the grant of the patent:
**30.03.2016 Bulletin 2016/13**

(21) Application number: **10796745.7**

(22) Date of filing: **12.07.2010**

(51) Int Cl.:
**H04B 3/32** *(2006.01)*          **H04M 11/06** *(2006.01)*

(86) International application number:
**PCT/CN2010/075106**

(87) International publication number:
**WO 2011/003368 (13.01.2011 Gazette 2011/02)**

(54) **METHOD FOR ESTIMATING STRENGTH OF CROSSTALK CHANNEL**

VERFAHREN ZUR EINSCHÄTZUNG DER STÄRKE EINES ÜBERSPRECHKANALS

PROCÉDÉ POUR ESTIMER LA FORCE D UN CANAL DE DIAPHONIE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **10.07.2009 US 224736 P
09.07.2010 US 833188**

(43) Date of publication of application:
**16.05.2012 Bulletin 2012/20**

(73) Proprietor: **Huawei Technologies Co., Ltd.
Longgang District
Shenzhen, Guangdong 518129 (CN)**

(72) Inventors:
• **RAPHAEL, Jean Cendrillon
Kennedy Town
Hong Kong (CN)**
• **LONG, Guozhu
Fremont, California 94539 (US)**

(74) Representative: **Epping - Hermann - Fischer
Patentanwaltsgesellschaft mbH
Schloßschmidstraße 5
80639 München (DE)**

(56) References cited:
**EP-A1- 2 012 517          WO-A1-2009/038669
CN-A- 1 863 099          CN-A- 1 937 433
US-A1- 2009 175 156**

• **"G.vdsl: Using orthogonal pilot sequences for
assisting FEXT channel estimation in vector
transmission.;SD-036", ITU-T DRAFTS ; STUDY
PERIOD 2005-2008, INTERNATIONAL
TELECOMMUNICATION UNION, GENEVA ; CH,
vol. Study Group 15 ; 4/15, 16 January 2007
(2007-01-16), pages 1-4, XP017533398, [retrieved
on 2007-01-16]**
• **DANNY VAN BRUYSSEL ALCATEL-LUCENT
BELL N V BELGIUM: "G.vector: Proposal for a
frequency division multiplexing scheme for pilot
sequences and sync-flags;C 265", ITU-T
DRAFTS ; STUDY PERIOD 2009-2012,
INTERNATIONAL TELECOMMUNICATION
UNION, GENEVA ; CH, vol. Study Group 15 ; 4/15,
22 November 2008 (2008-11-22), pages 1-4,
XP017446958, [retrieved on 2008-11-22]**
• **"G.vector: Frequency division multiplexing of
pilot sequences and sync-flags;08CC-043", ITU-T
DRAFTS ; STUDY PERIOD 2005-2008,
INTERNATIONAL TELECOMMUNICATION
UNION, GENEVA ; CH, vol. Study Group 15 ; 4/15,
9 September 2008 (2008-09-09), pages 1-4,
XP017534493, [retrieved on 2008-09-09]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

EP 2 452 443 B1

**Description**

**BACKGROUND**

Digital subscriber line (DSL) technologies can provide large bandwidth for digital communications over existing subscriber lines. When transmitting data over the subscriber lines, crosstalk interference can occur between the transmitted signals over adjacent twisted-pair phone lines, for example in a same or nearby bundle of lines, e.g. in a binder. Crosstalk introduces noise in DSL systems and reduces the data-rates that can be achieved in the DSL systems. Thus, crosstalk can significantly limit the performance of DSL technologies that use higher frequency bands, such as very high bit rate DSL 2 (VDSL2). Vectoring is one of the techniques that are used to cancel crosstalk in a bundle of lines. Vectoring is implemented at a location where the lines are co-located, such as at a Central Office (CO) of the DSL system. As such, a plurality of upstream signals that are transmitted in the lines from a plurality of customer premise equipments (CPEs) can be processed at the CO by a crosstalk canceller to cancel the crosstalk noise that occurs in the lines in the upstream direction. Vectoring can also be implemented at the CO to pre-process a plurality of downstream signals by a crosstalk precoder before transmitting the signals to the CPEs. As such, a crosstalk precoder training process is implemented where a plurality of pilot symbols are transmitted in the downstream and used to configure the crosstalk precoder based on a plurality of corresponding error feedback signals from the CPEs. The crosstalk training process is completed when the configured signals converge and the crosstalk noise that occurs in the downstream signals is canceled. The training process may also be implemented in the upstream, where a plurality of pilot symbols are transmitted and used to configure the crosstalk canceller based on a plurality of corresponding error signals from the CO receivers.

D1 ("G.vdsl: Using orthogonal pilot sequences for assisting FEXT channel estimation in vector transmission; DS-036") proposes that the current sync symbol can be modulated such that orthogonal pilot sequences are constructed.

D2 (US 2009/175156 A1) discloses efficient methods and apparatuses to determine information describing the crosstalk coupling between a plurality, i.e., at least two, communication lines.

D3 (DANNY VAN BRUYSSEL ALCATEL-LUCENT BELL N V BELGIUM: "G.vector: Proposal for a frequency division multiplexing scheme for pilot sequences and sync-flags; C 265") proposes a frequency division scheme to multiplex pilot sequences and the syncflag on G.vetor sync symbols, based on the general description in the paper of Alcatel-Lucent, "F. vector: Frequency division multiplexing of pilot sequences and sync-flags", ITU-T SG 15/Q4 contribution 08CC-043, Campbell, California, September 2008. In that scheme, tones conveying pilot sequences are interleaved with tones conveying sync-flags, and crosstalk estimates are extended to tones.

D4 ("G.vecor: Frequency division multiplexing of pilot sequences and sync-flags; 09CC-043" poposes using frequency division to multiplex pilot sequences and sync-flags on G.vetor sync symbols. In this scheme, tones conveying pilot sequences are interleaved with tones conveying sync-flages, and crosstalk estimates are extended to tones.

All methods and apparatus disclosed by D1-D4 have the following problems, which could be solved by the present application: for a good many of lines in the binder, such as for about 64 or even a few hundreds of lines, vectoring may require more complex processing and longer training time to calculate, measure or identify the dominant crosstalk channels, and therefore may be substantially costly.

**SUMMARY**

In one embodiment, the disclosure includes an apparatus comprising a vectoring control entity (VCE) at a CO coupled to a plurality of first transceivers at a plurality of CPEs and to a plurality of second transceivers at the CO via a plurality of corresponding DSLs and configured to process a plurality of probing signals comprising a plurality of orthogonal frequency signatures from the first transceivers that correspond to the DSLs to determine a plurality of upstream dominant crosstalk channels in the DSLs, and a crosstalk canceller coupled to the VCE and to the second transceivers at the CO and configured to process a subset of a plurality of signals from the first transceivers that correspond to the dominant crosstalk channels to reduce crosstalk noise in the DSLs in the upstream, wherein each of the probing signals is transmitted in a single sync symbol in each of the DSLs.

In another embodiment, the disclosure includes an apparatus comprising a VCE at a CO coupled to a plurality of first transceivers at a plurality of CPEs and to a plurality of second transceivers at the CO via a plurality of corresponding DSLs and configured to process a plurality of probing signals comprising a plurality of orthogonal frequency signatures from the second transceivers that correspond to the DSLs to determine a plurality of downstream dominant crosstalk channels in the DSLs, and a crosstalk precoder coupled to the VCE and to the second transceivers at the CO and configured to process a subset of a plurality of signals from the second transceivers that correspond to the dominant downstream crosstalk channels to reduce crosstalk noise in the DSLs in the downstream, wherein each of the probing signals is transmitted in a single sync symbol in each of the DSLs.

In another embodiment, the disclosure includes a network component comprising at least one processor coupled to a memory and configured to receive a plurality of probing signals from the other end of a plurality of corresponding lines, correlate the received probing signals or their error signals with the orthogonal frequency signatures to determine the dominant crosstalk channels for each of the lines, and send a plurality of signals that correspond to the dominant crosstalk channels to a crosstalk canceller to reduce crosstalk noise in the lines, wherein each of the orthogonal frequency signatures is transmitted in a sync symbol on one of the lines, and wherein the sync symbol comprises a plurality of tones.

These and other features will be more clearly understood from the following detailed description taken in conjunction with the accompanying drawings and claims.

**BRIEF DESCRIPTION OF THE DRAWINGS**

For a more complete understanding of this disclosure, reference is now made to the following brief description, taken in connection with the accompanying drawings and detailed description, wherein like reference numerals represent like parts.

FIG. 1 is a schematic diagram of an embodiment of a DSL system.
FIG. 2 is a schematic diagram of an embodiment of a crosstalk canceller.
FIG. 3 is a flowchart of an embodiment of a partial crosstalk cancellation method.
FIG. 4 is a flowchart of an embodiment of an orthogonal frequency signature control method.
FIG. 5 is a chart of an example of a set of dominant crosstalk channels in a set of lines.
FIG. 6 is a schematic diagram of one embodiment of a general-purpose computer system.

**DETAILED DESCRIPTION**

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Vectoring may be cost-effective in cancelling crosstalk noise in relatively small quantities of combined lines in a binder, such as in fiber-to-the-building (FTTB) deployments that comprise about 16 or about 32 lines in the binder. In such deployments, all the lines may be processed to achieve about full crosstalk cancellation. However, for larger quantity of lines in the binder, such as for about 64 or even a few hundred lines, vectoring may require more complex processing and longer training time, and therefore may be substantially costly. For example, a substantial number of pilot symbols in the signals may be needed to pre-process the downstream (or upstream) signals and account for crosstalk noise in such relatively large quantity of lines, which may add substantial complexity and delay to the crosstalk training process. Instead, partial crosstalk cancellation may be implemented using fewer system resources to reduce crosstalk in the lines and achieve sufficient line stability. Partial crosstalk cancellation may be implemented to process the upstream signals or pre-process the downstream signals in a subset of the lines in the binder that contribute more crosstalk noise than the remaining lines.

To implement partial crosstalk cancellation, a VCE may need to identify a plurality of dominant crosstalk line sources for each line in the binder at a plurality of frequencies, e.g. before processing the signals at a crosstalk canceller. In a previously proposed scheme, only the most dominant crosstalk line source for each line may be identified without crosstalk strength and frequency information. Further, the proposed scheme may not provide information about any additional substantial crosstalk line sources for the line, which may cause inefficient training of the crosstalk canceller and/or crosstalk precoder, and therefore inadequate partial crosstalk cancellation in the lines. Additionally, in the case of two similarly dominant crosstalk line sources for the same line, the previously proposed scheme may not correctly identify the dominant crosstalk line source. Due to these disadvantages, the previously proposed scheme may not be suitable for efficient partial crosstalk cancellation in a plurality of lines in the binder for a range of DSL signal frequencies.

Disclosed herein is a system and method for establishing efficient partial crosstalk cancellation in a plurality of lines in the binder, and for a plurality of frequencies. The method comprises identifying the crosstalk strength of a plurality of crosstalk line sources or crosstalk channels in the binder. The crosstalk strength of the crosstalk channels may be obtained using a single sync symbol per line, which may reduce the training time of the crosstalk canceller. The crosstalk strength of the crosstalk channels may also be obtained for a plurality of different frequencies to identify any variations in crosstalk strength of the crosstalk channels with changes in frequency. Specifically, the sync symbols may comprise a set of orthogonal frequency signals or signatures, which may be used to evaluate the strength of the crosstalk channels in the binder. The length of the orthogonal frequency signature may be controlled, e.g. based on the quantity of lines in the binder, to guarantee using enough orthogonal frequency signatures for substantially all of the active lines in the binder.

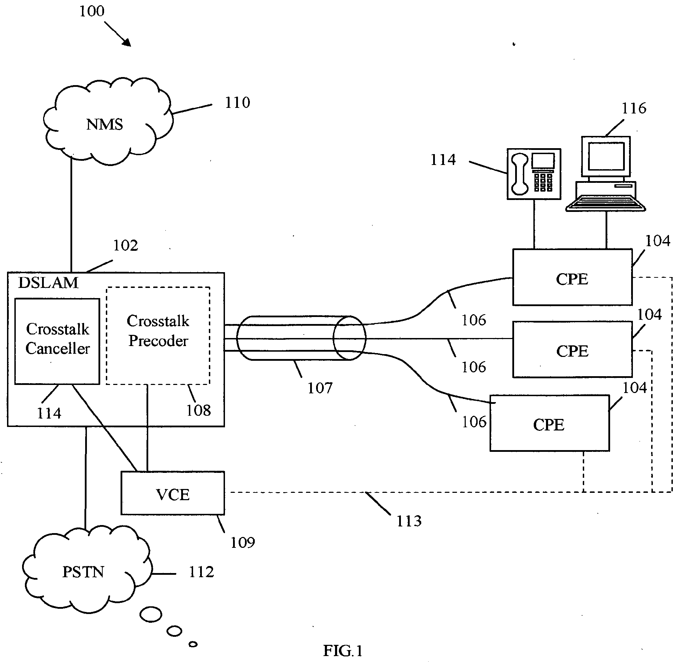

FIG. 1 illustrates one embodiment of a DSL system 100. The DSL system 100 may be a VDSL or VDSL2 system, an asymmetric DSL (ADSL) or ADSL2 system, or any other DSL system. The DSL system 100 may comprise a Digital Subscriber Line Access Multiplexer (DSLAM) 102 at the CO side and a plurality of CPEs 104, which may be coupled to the DSLAM 102 via a plurality of subscriber lines 106. Some of the subscriber lines 106 may be bundled in a binder 107. The DSLAM 102 may comprise a crosstalk precoder 108 and a crosstalk canceller 114, which may be coupled to a plurality of subscriber lines 106. Additionally, the DSL system 200 may comprise a VCE 109 that may be coupled to the crosstalk precoder 108 and the crosstalk canceller 114, and the CPEs 104 via a plurality of feedback channels 113.

The feedback channels 113 between the CPEs 104 and the VCE 109 (shown in dotted lines) may correspond to upstream logical data paths from the CPEs 104 to the DSLAM 102 and may not be physically separated from the subscriber lines 106 (shown in solid lines). The CPEs 104 may transmit the error feedback signals in the feedback channels 113 through the subscriber lines 106 to a plurality of corresponding receivers in the DSLAM 102, which may then extract the error feedback signals from the upstream data stream and send the error feedback signals to VCE 109. Additionally, the DSLAM system 102 may optionally comprise a network management system (NMS) 110 and a public switched telephone network (PSTN) 112. In other embodiments, the DSLAM system 102 may be modified to include splitters, filters, management entities, and various other hardware, software, and functionality. The NMS 110 may be a network management infrastructure that processes data exchanged with the DSLAM 102 and may be coupled to one or more broadband networks, such as the Internet. The PSTN 112 may be a network that generates, processes, and receives voice or other voice-band signals.

The DSLAM 102 may be located at the CO side of the DSL system 100 and may comprise switches and/or splitters, which may couple the NMS 110, the PSTN 112, and the subscriber lines 106. For instance, the splitter may be a 2:1 coupler that forwards data signals received from the subscriber lines 106 to the NMS 110 and the PSTN 112, and forwards data signals received from the NMS 110 and the PSTN 112 to the subscriber lines 106. Further, the splitter may optionally comprise one or more filters to help direct data signals between the NMS 110, the PSTN 112, and the subscriber lines 106. Additionally, the DSLAM 102 may comprise at least one DSL transmitter/receiver (transceiver), e.g. a VTU-O, which may exchange signals between the NMS 110, the PSTN 112, and the subscriber lines 106. The signals may be received and transmitted using the DSL transceiver, such as a modem.

The DSL transceiver or VTU-O of the DSLAM 102 may comprise a forward error correction (FEC) codeword generator that generates FEC data. The DSL transceiver may also comprise an interleaver that interleaves the transmitted data across a plurality of tones in a group of symbols. For instance, the DSL transceiver may use a discrete multi-tone (DMT) line code that allocates a plurality of bits for each sub-carrier or tone in each symbol. The DMT may be adjusted to various channel conditions that may occur at each end of a subscriber line. In an embodiment, the DSL transceiver of the DSLAM 102 may be configured to transmit data at similar or different rates for each subscriber line 106.

The CPEs 104 may be located at the customer premises, where at least some of the CPEs 104 may be coupled to a telephone 114 and/or a computer 116. The telephone 114 may be hardware, software, firmware, or combinations thereof that generates, processes, and receives voice or other voice-band signals. The CPE 104 may comprise a switch and/or a splitter, which may couple the subscriber lines 106 and the telephone 114 and the computer 116. The CPE 104 may also comprise a DSL transceiver, e.g. a VTU-R, to exchange data between the CPE 104 and the DSLAM 102 via the subscriber line 106. For instance, the splitter may be a 2:1 coupler that forwards data signals received from the subscriber line 106 to the telephone 114 and the DSL transceiver, and forwards voice signals received from the telephone 114 and data signals from the DSL transceiver to the subscriber line 106. The splitter may optionally comprise one or more filters to help direct signals to and from the telephone 114 and the DSL transceiver.

The DSL transceiver or VTU-R of the CPE 104, e.g. a modem, may transmit and receive signals through the subscriber lines 106. For instance, the DSL transceiver may process the received signals to obtain the transmitted data from the DSLAM 102, and pass the received signals to the telephone 114, the computer 116, or both. The CPEs 104 may be coupled to the DSLAM 102 directly via the subscriber lines. For example any of the CPEs 104 may be coupled to a subscriber line 106 from the DSLAM 102. The CPEs 104 may access the NMS 110, the PSTN 112, and/or other coupled networks via the subscriber lines 106 deployed by the DSLAM 102.

The subscriber lines 106 may be telecommunications paths between the DSLAM 102 and the CPE 104, and may comprise one or more twisted-pairs of copper cable. Crosstalk interference may occur between a plurality of subscriber lines 106 that are deployed by the DSLAM 102, e.g. in the binder 107. The crosstalk interference may be related to the power, frequency, and travel distance of the transmitted signals and may limit the communications performance in the network. For instance, when the power spectral density (PSD) of the transmitted signals increase, e.g. over a range of frequencies, the crosstalk between the adjacent subscriber lines 106 may increase and hence the data rates may decrease. The propagation of the signals in the downstream direction from the DSLAM 102 to the CPEs 104 may be represented by:

$$y = Hx + z, \qquad\qquad (1)$$

where y is a vector that represents the signals at the CPEs 104, H is a matrix that represents the crosstalk channels in the lines, x is a vector that represents the signals from the DSLAM 102, and z is a vector that represents random errors or noise.

The crosstalk precoder 108 may be configured to cancel or reduce the crosstalk in the subscriber lines 106 in the downstream, and the crosstalk canceller 114 may be configured to cancel or reduce the crosstalk in the subscriber lines 106 in the upstream. The crosstalk precoder 108 and/or the crosstalk canceller 114 may use a partial crosstalk cancellation scheme to reduce the crosstalk noise in the downstream signals, the upstream signals, or both. For instance, the crosstalk canceller 114 may receive and process the upstream signals from the CPEs 104 according to the partial crosstalk cancellation scheme to reduce the crosstalk noise in the subscriber lines 106 in the upstream. Additionally or alternatively, the crosstalk precoder 108 may pre-process and configure the downstream signals from the DSLAM 102 based on a plurality of error feedback signals from the CPEs 104, and hence forward the pre-distorted downstream signals to the CPEs 104. For instance, the crosstalk precoder 108 may transmits pre-distorted downstream signals to the subscriber lines 106 to pre-compensate or reduce crosstalk in the lines. The crosstalk precoder 108 may process the downstream signals from the DSLAM 102 transmitter (e.g. from a plurality of VTU-Os), add distortion to the downstream signals, and transmit the pre-distorted downstream signals to the CPEs 104 via the subscriber lines 106. The pre-distorted signals may be generated by the precoder whose parameters are properly chosen to minimize the crosstalk in the downstream channels. In order for the precoder to select the appropriate parameters, the CPEs 104 may send back the error signals in the downstream receivers as feedback for the precoder to update its parameters. For instance, a plurality of VTU-Rs at the CPEs 104 may measure the errors for a plurality of received symbols (e.g. DMT symbols) from the crosstalk precoder 108, and transmit back a plurality of corresponding error feedback signals, via a feedback channel.

In another embodiment, a plurality of transceivers at the customer premise that correspond to one customer or a plurality of customers may be co- located in a single multi-line CPE 104. As such, a downstream crosstalk canceller that may be coupled to the receivers in the multi-line CPE 104 may be used to reduce crosstalk noise in the lines, instead of using the crosstalk precoder 108 in the DSLAM 102. In this case, the downstream error signals calculated by the CPE 104 may be used locally to update the coefficients of the downstream crosstalk canceller at the CPE 104, instead of sending the error signals from the CPE 104 to the DSLAM 102 to update the coefficients of the crosstalk precoder 108. In another embodiment, both the downstream crosstalk canceller at the CPE 104 and the crosstalk precoder 108 at the DSLAM 102 may be used to reduce the crosstalk noise in the lines. In this case, the error feedback from CPE 104 to the DSLAM 102 may be needed, e.g. to train the crosstalk precoder 108.

The error feedback signals may be processed according to the partial crosstalk cancellation scheme before configuring the downstream signals to compensate for and reduce the crosstalk noise that occur in the subscriber lines 106 before the signals arrive to the CPEs 104. According to the partial crosstalk cancellation scheme, the signals that correspond to the subscriber lines 106 may be received and processed to determine a subset of crosstalk channels or lines that contribute the highest crosstalk noise levels to each line in the subscriber lines 106. For example, the crosstalk precoder 108 and/or the crosstalk canceller 114 may process the signals in the subscriber lines 106 to identify about eight most dominant crosstalk line sources or crosstalk channels for each of the subscriber lines 106. The crosstalk canceller 108 may then use the signals (and/or related information) that correspond to the identified subset of crosstalk channels to reduce the crosstalk noise in the subscriber lines 106. Using the most dominant crosstalk channels instead of all the crosstalk channels for each of the subscriber lines 106 may reduce the processing time and complexity of the crosstalk reduction process. Additionally, using the most dominant crosstalk channels instead of a single dominant crosstalk channel for each of the subscriber lines may substantially improve the crosstalk reduction process and achieve sufficient or acceptable reductions in the crosstalk noise levels in the subscriber lines 106. Thus, the partial crosstalk cancellation scheme may provide a tradeoff between the achievable reduction in crosstalk noise in the subscriber lines 106 and the required amount of processing time and complexity.

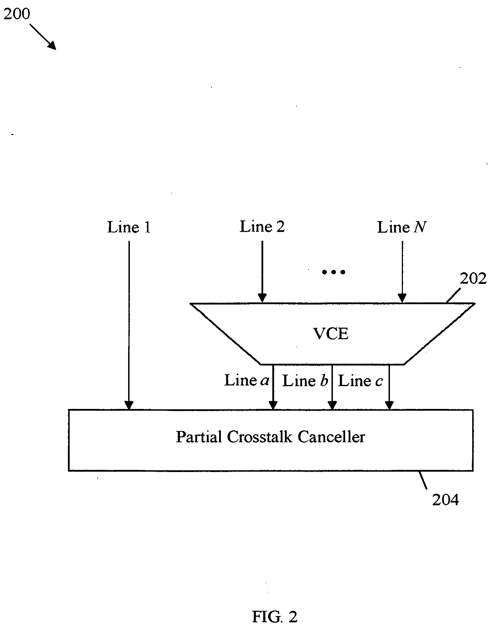

FIG. 2 illustrates an embodiment of a crosstalk canceller 200, which may use the partial crosstalk cancellation scheme to reduce or substantially remove crosstalk noise in a DSL system, e.g. in the downstream signals, the upstream signals, or both. For instance, the crosstalk canceller 200 may correspond to the crosstalk canceller 114 or the crosstalk precoder 108 in the DSL system 100. The crosstalk canceller 200 may be located at a CO and coupled to a plurality of combined subscriber lines, e.g. in a binder, between the CO and a plurality of corresponding CPEs. The partial crosstalk canceller 200 may comprise a VCE 202 and a partial crosstalk canceller 204, which may be coupled to the VCE 202. The VCE 202 may be coupled to a plurality of VTU-Rs at the CPEs via the subscriber lines and the partial crosstalk canceller 204 may be coupled to a plurality of VTU-Os at the CO. The set of subscriber lines may comprise line 1, line 2..., and line $N$, where $N$ is an integer that may be equal to about eight, about 16, about 32, about 64, about 200 or any other integer.

The VCE 202 may be configured to process the signals that correspond to the subscriber lines, e.g. line 1, line 2..., and line *N*, to determine a subset of crosstalk channels or lines that contribute the highest crosstalk noise levels to each line in the subscriber lines 106. Each crosstalk channel may represent the crosstalk noise level between the line and one of the remaining lines. The signals may comprise upstream signals that may be transmitted from the CPEs. The partial crosstalk canceller 204 may then use the upstream signals corresponding to the most dominant crosstalk channels for each line to remove the dominant upstream crosstalk noise in the line. Alternatively, the partial crosstalk canceller 204 may use the precoding technique to process the downstream transmitted signals of the most dominant crosstalk channels and remove or reduce the downstream crosstalk noise in the line. For example, the VCE 202 may identify line *a*, line *b*, and line *c* as the three most dominant crosstalk channels for line 1 (*a*, *b*, and *c* are integers $\leq N$ and $\neq 1$), and send the corresponding signals to the partial crosstalk canceller 204. The partial crosstalk canceller 204 may then process the transmitted signals in line 1, line *a*, line *b*, and line *c* using the precoding technique to pre-distort the downstream transmitted signals such that at the CPE's receiver, the downstream crosstalk in line 1 may be canceled or reduced.

Typically, to obtain the strength of the crosstalk channels in the subscriber lines and hence identify the most dominant crosstalk channels, a pilot sequence that comprises a relatively large quantity of sync symbols, e.g. greater than or equal to about 128 symbols, may be transmitted in each of the lines. Processing such large quantity of sync symbols to identify the most dominant crosstalk channels for each line and thus train the crosstalk canceller or precoder at startup may require a substantial amount of time, e.g. about eight seconds for about 128 sync symbols. Such required amount of time may cause a relatively slow startup time, e.g. in a VDSL2 system or similar systems, and reduce the customer's quality of experience.

In an embodiment, the crosstalk canceller 200 may implement a partial crosstalk cancellation scheme that requires less training or startup time using fewer transmitted sync symbols in the lines, which may be suitable for VDSL2 systems or similar systems. Accordingly, a set of orthogonal frequency signals or signatures may be transmitted in the subscriber lines, e.g. from the CPEs or VTU-Rs, and may be used to identify the most dominant crosstalk channels for each line. Specifically, a sync symbol that comprises one of the orthogonal frequency signatures may be transmitted on each of the lines, such that the frequency signatures transmitted on each of the lines may be orthogonal, e.g. may not be substantially correlated, to the other frequency signatures. Thus, the error signals in the received signals corresponding to the orthogonal frequency signatures on the different lines may be received by the VCE 202 and correlated to determine the dominant crosstalk channels for each of the lines. For instance, a correlation operation may be used to determine the crosstalk channels with the highest correlations, and therefore the highest crosstalk noise. Since a single sync symbol may be transmitted on each of the lines at the same time, the VCE 202 may process fewer sync symbols than in the case of other schemes to train the partial crosstalk canceller 204, which may reduce the training and startup time and improve the customer's quality of experience. Further, using the orthogonal frequency signatures and the correlation operation to obtain the most dominant crosstalk channels for each line may reduce the complexity of the partial crosstalk cancellation process in comparison to other schemes.

Typically, the crosstalk noise in the crosstalk channels in DSL systems may vary relatively slowly with frequency changes, and therefore a set of crosstalk channels may be relatively constant over a relatively small frequency range or window. Since the orthogonal signatures may pass through relatively constant crosstalk channels within the frequency window, the orthogonal frequency signatures may remain substantially mutually orthogonal after the crosstalk channels, and hence may be suitable to evaluate the crosstalk channels for each of the lines in the same frequency window. Additionally, the set of orthogonal frequency signatures that may be processed using correlation may provide different sets of dominant crosstalk channels at different frequency windows for each line. As such, the orthogonal frequency signatures may also be used to determine the changes in the crosstalk channels over the frequency windows, e.g. within a transmission frequency band, for each line.

In an embodiment, the most dominant crosstalk channels for the lines may be identified using an algorithm, where the frequency signature of any line *n* (*n* is an integer $\leq N$) may be represented as $w_n[0]... w_n[L\text{-}1]$. The frequency signature may comprise *L* elements, which may be determined based on the quantity of lines. As such, the *k*th element of the frequency signature may be denoted as $w_n[k]$. The frequency signature may be transmitted in a sync symbol that comprises a plurality of tones that may have a plurality of indices *k*, for instance $k = 10m + j$, $j \in \{0,2,3,4,5,6,8,9\}$. The remaining tones in the sync symbol may have the *indices* $k = 10n + j$, $j \in \{1,7\}$ and may be reserved as flag tones. The frequency signature may be repeated across a plurality of frequency windows, e.g. to cover an entire frequency transmission band. Thus, an extended frequency signature of line *n* may be defined as:

$$\overline{w}_n[k] = \begin{cases} w_n[\mathrm{mod}_L(k-2[k/10])], & k=10n, \\ w_n[\mathrm{mod}_L(k-2[k/10]-1)], & k=10n+j,\ j \in \{2,3,4,5,6\}, \\ w_n[\mathrm{mod}_L(k-2[k/10]-2)], & k=10n+j,\ j \in \{8,9\}, \\ 0, & k=10n+j,\ j \in \{1,7\}. \end{cases}$$

For example, if *L*=16, then the extended frequency signature may be defines as:

$$\overline{w}_n[0] = \overline{w}_n[0] \qquad \overline{w}_n[10] = \overline{w}_n[8], \qquad \overline{w}_n[20] = \overline{w}_n[0],$$
$$\overline{w}_n[1] = 0, \qquad \overline{w}_n[11] = 0, \qquad \overline{w}_n[21] = 0,$$
$$\overline{w}_n[2] = w_n[1], \qquad \overline{w}_n[12] = \overline{w}_n[9], \qquad \overline{w}_n[22] = \overline{w}_n[1],$$
$$\overline{w}_n[3] = \overline{w}_n[2], \qquad \overline{w}_n[13] = \overline{w}_n[10], \qquad \overline{w}_n[23] = \overline{w}_n[2],$$
$$\overline{w}_n[4] = \overline{w}_n[3], \qquad \overline{w}_n[14] = \overline{w}_n[11], \qquad ...$$
$$\overline{w}_n[5] = \overline{w}_n[4], \qquad \overline{w}_n[15] = \overline{w}_n[12],$$
$$\overline{w}_n[6] = \overline{w}_n[5], \qquad \overline{w}_n[16] = \overline{w}_n[13],$$
$$\overline{w}_n[7] = 0, \qquad \overline{w}_n[17] = 0$$
$$\overline{w}_n[8] = \overline{w}_n[6], \qquad \overline{w}_n[18] = \overline{w}_n[14],$$
$$\overline{w}_n[9] = \overline{w}_n[7], \qquad \overline{w}_n[19] = \overline{w}_n[15],$$

During the transmission of a sync symbol *t* on line *n*, a VTU-R or modem *n* (e.g. at the CPE) may transmit a symbol $s_n[k,t]$ on tone *k*, such as:

$$s_n[k,t] = \begin{cases} f_n[t], & k=10n+j,\ j \in \{1,7\}, \\ \overline{w}_n[k], & \text{otherwise,} \end{cases} \tag{1}$$

where $f_n[t]$ denotes a flag bit for line *n* during the sync symbol *t*. Similarly, a plurality of orthogonal frequency signatures may be allocated for different lines, such as:

$$\sum_k w_n[k] \cdot w_m[k] = 0, \forall n \neq m, \tag{2}$$

where *n* and *m* correspond to line *n* and line *m*, respectively. The received signal on tone *k* of *line n* at sync symbol *t* may be defined as $y_n[k,t] = \sum_m h_{n,m}[k]s_m[k,t] + z_n[k,t]$, where $h_{n,m}[k]$ is the crosstalk channel from line *m* into *line n* on tone *k*, and $z_n[k,t]$ is the background noise of line *n* on *tone k* during the sync symbol *t*. Accordingly, the normalized error of line *n* on tone *k* may be represented as:

$$e_n[k,t] = y_n[k,t] - h_{n,n}[k]s_n[k,t] = \sum_{m \neq n} h_{n,m}[k]s_m[k,t] + z_n[k,t].$$

At the receiver (e.g. at the VCE), the error in line *n* may be correlated with the frequency signature of line *m* to estimate the crosstalk channel strength as:

$$\hat{h}_{n,m}[k] = \frac{1}{\alpha_m} \sum_{j=k}^{k+L+L/4-1} \overline{w}_m[j] e_n[j,t]$$

$$= \frac{1}{\alpha_m} \sum_{j=k}^{k+L+L/4-1} \overline{w}_m[j] \left( \sum_{v \neq n} h_{n,v}[j] s_v[j,t] + z_n[j,t] \right)$$

$$= \frac{1}{\alpha_m} \sum_{j=k}^{k+L+L/4-1} \overline{w}_m[j] \sum_{v \neq n} h_{n,v}[j] s_v[j,t] + \overline{z}_{n,m}[j,t],$$

where $k$ is defined as $k = nL$, the scaling factor is defined as:

$$\alpha_m = \sum_{j=1}^{L} w_m[j]^2 , \qquad\qquad (3)$$

and the noise term $\overline{z}_{n,m}[k, t]$ is defined as

$$\overline{z}_{n,m}[k,t] = \frac{1}{\alpha_m} \sum_{j=k}^{k+L+L/4-1} \overline{w}_m[j] z_n[j,t] .$$

Since the crosstalk channel varies smoothly with frequency, then if $L$ is small enough, the following approximation may be made:

$$h_{n,v}[j] \approx h_{n,v}[k], \ \forall j \in \{k, k+1, ..., k+L+L/4-1\}$$

Consequently, the crosstalk channel strength may be defined as:

$$\hat{h}_{n,m}[k] = \frac{1}{\alpha_m} \sum_{v \neq n} h_{n,v}[k] \sum_{j=k}^{k+L+L/4-1} \overline{w}_m[j] s_v[j,t] + \overline{z}_{n,m}[k,t]$$

$$= \frac{1}{\alpha_m} \sum_{v \neq n} h_{n,v}[k] \sum_{j=1}^{L} w_m[j] w_n[j] + \overline{z}_{n,m}[k,t]$$

$$= \frac{1}{\alpha_m} h_{n,m}[k] \sum_{j=1}^{L} w_m[j]^2 + \overline{z}_{n,m}[k,t]$$

$$= h_{n,m}[k] + \overline{z}_{n,m}[k,t],$$

where equation (1) was used in the second line of the equation above, equation (2) was used in the third line, and equation (3) was used in the fourth line.

The algorithm and equations above may be used for each victim line $n$, disturber line $m$, and for each tone $k = nL$, where $n$ is an integer. As such, the crosstalk channel between any two lines (e.g. in the binder) may be estimated in each frequency window of interest, which may comprise a quantity of $L$ tones. Thus, the most dominant crosstalk channels for each line and each frequency window may be determined, and then used to train the crosstalk canceller 200 and/or reduce the crosstalk noise in the received signals. The algorithm used may comprise the following steps:

| for tone index $k$ = 0, $L$, 2$L$, ..., $K$ |
| --- |

(continued)

| |
|---|
| for each disturber line $m$ <br><br> estimate the crosstalk channel $\qquad \hat{h}_{n,m}[k] = \dfrac{1}{\alpha_m} \displaystyle\sum_{j=k}^{k+L+L/4-1} \overline{w}_m[j]e_n[j,t]$ <br><br> end |
| determine the dominant crosstalk channels in the current frequency window according to $\hat{h}_{n,m}[k]$ <br> allocate the partial crosstalk canceller hardware resources to cancel the dominant crosstalk channels |
| end <br> begin training the crosstalk canceller coefficients using the dominant crosstalk channels. |

To implement the algorithm above properly, an appropriate length or number of tones $L$ for the orthogonal frequency signature may be needed. If the length of the orthogonal frequency signature is not sufficiently long, then the quantity of orthogonal frequency signatures may not be sufficient to allocate an orthogonal frequency signature to each of the lines in the binder. For instance, if there are $N$ lines in the binder, a sufficient quantity of orthogonal frequency signature may be greater than or equal to about $N$. However, if the length of the orthogonal frequency signature is too long, then the crosstalk channels may substantially vary over the frequency transmission band, which may comprise a repeated orthogonal frequency signature. Consequently, the frequency signatures may become less orthogonal with respect to one another over the span of the frequency signature window, which may result in the inaccurate measurement and/or evaluation of the strength of the crosstalk channels.

In an embodiment, to ensure the accurate measurement and evaluation of the strength of the crosstalk channels, the VCE may be configured to control both the length and content of the orthogonal frequency signatures for the lines. The VCE may select an appropriate length for the orthogonal frequency signatures based on the quantity of lines in the bundle. The VCE may select the same length or different lengths for the orthogonal frequency signature for the downstream signals and the upstream signals on each line. Additionally, the VCE may send a message, e.g. according to a pre-defined protocol, to each VTU-O at the CO that corresponds to each line in the bundle to inform the VTU-O of the length and content of the orthogonal frequency signature for the corresponding line. The VTU-O may then send a control message, e.g. according to the same protocol, to the VTU-R at the CPE that corresponds to the same line to inform the VTU-R of the length and content of the orthogonal frequency signature for the line. The control message may be sent by the VTU-O to the VTU-R via a control channel, e.g. an embedded operations channel (EOC) as part of the initialization procedure of the line. Upon receiving the control message, the VTU-R may return an acknowledgement message to the VTU-O. Thus, the VCE, the VTU-O, and the VTU-R may be aware of the length and content of the orthogonal frequency signature for each of the lines in each direction.

In embodiment, the VCE may determine an appropriate length, e.g. a quantity of tones $L$, for the orthogonal frequency signature on each line in a dynamic manner based on how slowly the crosstalk channels vary with frequency changes and based on how many lines there are in the binder. The length of the orthogonal frequency signature may be selected such that $L \geq N$, where $N$ is the number of lines in the binder. Additionally, to ensure sufficient frequency resolution, the smallest possible value for $L$ that satisfies the condition $L \geq N$ and possibly other requirement may be selected. For example, if Walsh-Hadamard sequences are used for defining the orthogonal frequency signatures, then $L$ may be selected as the smallest power of two that may be greater than or equal to $N$, e.g. $L = 2^{\lceil \log_2 N \rceil}$, where [ ] denotes the ceiling operation. Further, the smallest possible value of $L$ may be selected to maintain the orthogonality of the frequency signatures within a frequency window, e.g. the window of L tones, and after transmission through the lines (e.g. from the VTU-R to the VTU-O).

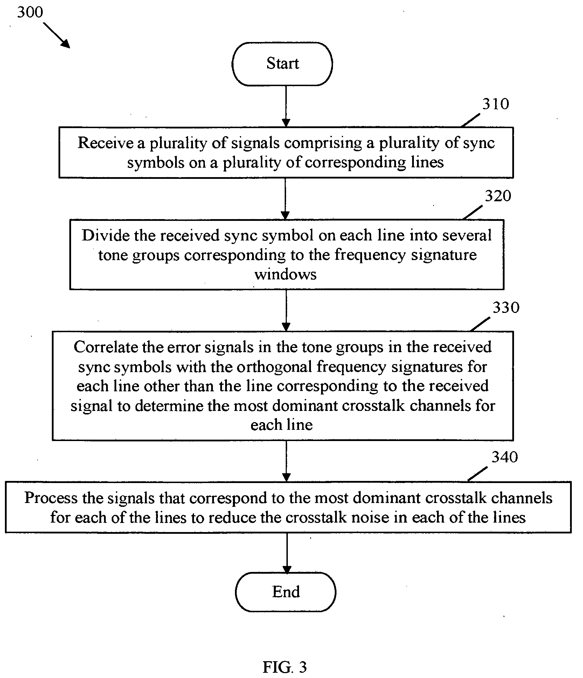

FIG. 3 illustrates an embodiment of a partial crosstalk cancellation method 300, which may be implemented by the crosstalk canceller 200 or the crosstalk canceller 114 or the crosstalk precoder 108 in the DSL system 100. The method 300 may begin at block 310, where a plurality of signals comprising a plurality of sync symbols may be received on a plurality of corresponding lines. For example, the VCE 202 may receive a sync symbol on each of line 1, line 2..., and line $N$ that may be coupled to different VTU-Rs at different CPEs: Each transmitted sync symbol may comprise one of the orthogonal frequency signatures, which may be assigned by the VCE 202. At block 320, the received sync symbol on each line may be divided into several tone groups corresponding to the frequency signature windows. At block 330, the error signals in the tone groups in the received sync symbols may be correlated with the orthogonal frequency signatures for each line other than the line corresponding to the received signal to determine the most dominant crosstalk channels for each line. For instance, the crosstalk channels that may have the highest correlations between the error signal in the received signal in one of the lines and the frequency signatures in the remaining lines may correspond to the most dominant crosstalk line sources for that line. This process may be repeated for each of the tone groups so that the dominant crosstalk line sources for different frequency ranges may be determined. At block 340, the signals that correspond to the most dominant crosstalk channels for each of the lines may be processed to reduce the crosstalk noise in each of the lines. For instance, the partial crosstalk canceller 204 may process the signals in the most dominant crosstalk channels for each line using the vectoring technique to reduce the crosstalk noise in the line. The process may be applied to the crosstalk canceller 114 for the upstream and/or the crosstalk precoder 108 for the downstream. For the upstream, the error signals may be calculated at the upstream receivers at the CO, where the VCE is located. For the downstream, the error signals may be calculated at the CPEs and then transmitted from the CPEs to the VCE in the CO, via the error feedback channels. The method 300 may then end. The method 300 may be repeated to adapt to the changes in the crosstalk environment.

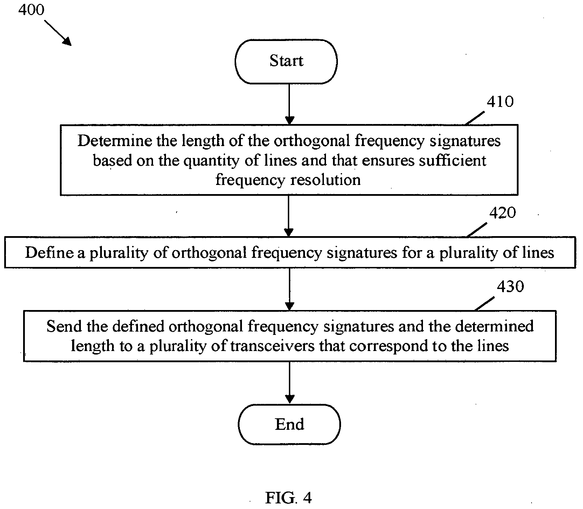

FIG. 4 illustrates an embodiment of an orthogonal frequency signature control method 400, which may be used to configure the orthogonal frequency signatures and set a suitable length for the orthogonal frequency signatures in the partial crosstalk cancellation process. For instance, the orthogonal frequency signature control method 400 may be implemented by the crosstalk canceller 114 or the crosstalk canceller 108 prior to use the partial crosstalk cancellation method 300 to process the received signals in the lines. At block 410, the length of the orthogonal frequency signatures may be determined based on the quantity of lines and that ensures sufficient frequency resolution. As such, the length or quantity of tones $L$ in each of the orthogonal frequency signatures may be at least equal to about the quantity of lines $N$. In some embodiments, $L$ may be an integer multiple of $N$ but may not exceed a threshold that causes substantial orthogonality variations with frequency changes in the received signals. In some embodiments, the VCE may update the length of the orthogonal frequency signatures as the number of active lines in the binder changes, e.g. in a dynamic manner. For example, if the number of lines in the binder is equal to 20, then the length of the orthogonal frequency signatures may be equal to 32. At block 420, a plurality of orthogonal frequency signatures may be defined for a plurality of lines. For example, the orthogonal frequency signatures may be configured for a set of tones in a sync symbol, e.g. as a Walsh-Hadamard sequence, on each of the lines. At block 430, the defined orthogonal frequency signatures and the determined length may be sent to a plurality of transceivers that correspond to the lines. For example, the VCE 202 may send the orthogonal frequency signatures and their length to the VTU-Os that are coupled to the lines, where each VTU-O may receive the orthogonal frequency signature for the corresponding line. Each VTU-O may then send this information to a corresponding VTU-R. The method 400 may then end. The VCE may then process the signals using the partial crosstalk cancellation method 300.

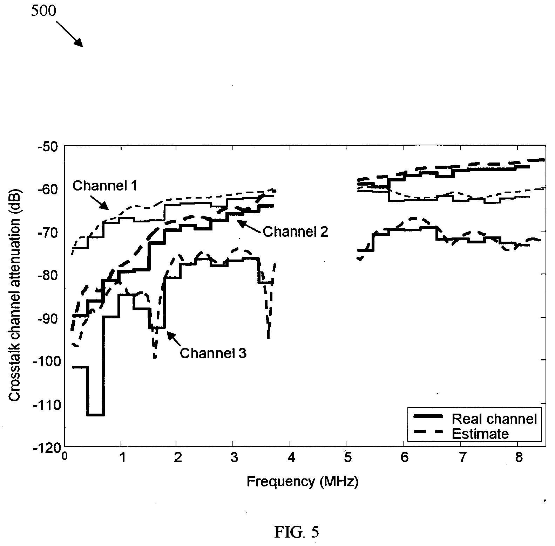

FIG. 5 shows an example of the performance of the proposed partial crosstalk cancellation approach on a set of crosstalk channels in one of lines. Specifically, the crosstalk channels were simulated for 16 lines in a binder, which have a VDSL2 profile 17a under annex A with downstream mask D-32. The length of the lines is equal to 300 meters (m) and the diameter of the lines is equal to 0.5 millimeter (mm). The background noise was added to the signals in the lines, which was set to -140 dBm per Hertz (dBm/Hz). The length of the frequency signature $L$ was set to 64 tones, and thus the frequency signature may repeat every 80 tones in the transmission frequency band, e.g. from about 0.1 Megahertz (MHz) to about four MHz and from about five MHz to about eight MHz. The set of crosstalk channels comprising three crosstalk channels, e.g. Channel 1, Channel 2, and Channel 3, were simulated for one of the lines. For each of the three crosstalk channels, FIG. 5 shows the crosstalk channel attenuation (in dB) vs. frequency (in MHz). Specifically, three actual (e.g. simulated) crosstalk channels are shown in dashed lines and three corresponding measured (or estimated) crosstalk channels are shown in solid lines. The measured crosstalk channels were obtained using the algorithm described above and their attenuation values are substantially close to the attenuation values of the actual crosstalk channels. It may be seen that among those 3 crosstalk channels, Channel 1 is the most dominant one and Channel 2 is the second dominant one. These results suggest that the algorithm may be suitable to measure or evaluate the most dominant crosstalk channels for each of the lines in the binder with sufficient accuracy. As such, the measured crosstalk channels may be processed, e.g. by the crosstalk canceller 200, to efficiently reduce the crosstalk noise in the lines.

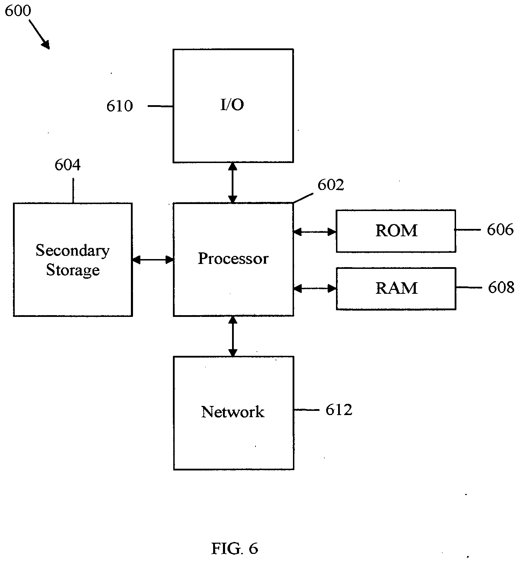

The components described above may be operated in conjunction with any general-purpose network component, such as a computer or network component with sufficient processing power, memory resources, and network throughput capability to handle the necessary workload placed upon it. FIG. 6 illustrates a typical, general-purpose network component 600 suitable for implementing one or more embodiments of the components disclosed herein. The network component 600 may include a processor 602 (which may be referred to as a central processor unit or CPU) that is in communication with any memory devices including secondary storage 604, read only memory (ROM) 606, random access memory (RAM) 608, input/output (I/O) devices 610, and network connectivity devices 612, or combinations thereof. The processor 602 may be implemented as one or more CPU chips, or may be part of one or more application specific integrated circuits (ASICs).

The secondary storage 604 is typically comprised of one or more disk drives or tape drives and is used for non-volatile storage of data and as an over-flow data storage device if RAM 608 is not large enough to hold all working data.

Secondary storage 604 may be used to store programs that are loaded into RAM 608 when such programs are selected for execution. The ROM 606 is used to store instructions and perhaps data that are read during program execution. ROM 606 is a non-volatile memory device that typically has a small memory capacity relative to the larger memory capacity of secondary storage 604. The RAM 608 is used to store volatile data and perhaps to store instructions. Access to both ROM 606 and RAM 608 is typically faster than to secondary storage 604.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, $R_1$, and an upper limit, $R_u$, is disclosed, any number falling within the range is specifically disclosed. In particular, the following numbers within the range are specifically disclosed: $R = R_1 + k * (R_u - R_1)$, wherein k is a variable ranging from 1 percent to 100 percent with a 1 percent increment, i.e., k is 1 percent, 2 percent, 3 percent, 4 percent, 5 percent, ..., 50 percent, 51 percent, 52 percent, ..., 95 percent, 96 percent, 97 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

**Claims**

1. An apparatus (100) **characterized in that** comprising:

   a vectoring control entity VCE (109, 202) at a central office CO coupled to a plurality of first transceivers at a plurality of customer premise equipments CPEs (104) and to a plurality of second transceivers at the CO via a plurality of corresponding digital subscriber lines DSLs (106) and configured to process a plurality of probing signals comprising a plurality of orthogonal frequency signatures from the first transceivers that correspond to the DSLs (106) to determine a plurality of upstream dominant crosstalk channels in the DSLs (106); and
   a crosstalk canceller (114, 200) coupled to the VCE (109, 202) and to the second transceivers at the CO and configured to process a subset of a plurality of signals from the first transceivers that correspond to the dominant crosstalk channels to reduce crosstalk noise in the DSLs (106) in the upstream,
   wherein each of the probing signals is transmitted in a single sync symbol in each of the DSLs (106).

2. The apparatus (100) of claim 1, wherein each of the orthogonal frequency signatures comprises a plurality of tones, and wherein the length L of the orthogonal frequency signatures in tones is determined such that each of the DSLs (106) has a unique frequency signature and there are enough mutually orthogonal frequency signatures for all the DSLs (106).

3. The apparatus (100) of claim 2, wherein the length of the orthogonal frequency signatures $L$ in the tones is equal to the smallest power of two that is greater than or equal to the quantity of the DSLs (106) $N$, such that $L = 2^{[\log_2 N]}$, where [ ] denotes a ceiling function.

4. The apparatus (100) of any one of claims 1 to 3, wherein the probing signals or their error signals are processed using a correlation operation with the orthogonal frequency signatures to determine the dominant crosstalk channels in the DSLs (106), and wherein the subset of signals that correspond to the dominant crosstalk channels are processed using a crosstalk cancellation scheme to reduce crosstalk noise in the DSLs (106).

5. An apparatus (100) **characterized in that** comprising:

a vectoring control entity VCE (109, 202) at a central office CO coupled to a plurality of first transceivers at a plurality of customer premise equipments CPEs (104) and to a plurality of second transceivers at the CO via a plurality of corresponding digital subscriber lines DSLs (106) and configured to process a plurality of probing signals comprising a plurality of orthogonal frequency signatures from the second transceivers that correspond to the DSLs (106) to determine a plurality of downstream dominant crosstalk channels in the DSLs (106); and a crosstalk precoder (108, 200) coupled to the VCE (109, 202) and to the second transceivers at the CO and configured to process a subset of a plurality of signals from the second transceivers that correspond to the dominant downstream crosstalk channels to reduce crosstalk noise in the DSLs (106) in the downstream, wherein each of the probing signals is transmitted in a single sync symbol in each of the DSLs (106).

6. The apparatus (100) of claim 5, wherein the VCE (109, 202) updates a plurality of precoding coefficients of the crosstalk precoder (108, 200) to train the crosstalk precoder to reduce crosstalk noise in a plurality of downstream signals from the second transceivers, and wherein a plurality of signals from the first transceivers comprise a plurality of error feedback signals that are used to train the crosstalk precoder.

7. The apparatus (100) of claim 5, wherein each of the orthogonal frequency signatures comprises a plurality of tones, and wherein the length $L$ of the orthogonal frequency signatures in tones is determined such that each of the DSLs (106) has a unique frequency signature and there are enough mutually orthogonal frequency signatures for all the DSLs (106).

8. The apparatus (100) of claim 7, wherein the length $L$ of the orthogonal frequency signatures in the tones is equal to the smallest power of two that is greater than or equal to the quantity of DSLs (106) $N$, such that $L = 2^{[\log_2 N]}$, where [ ] denotes a ceiling function.

9. The apparatus (100) of claim 5, wherein the probing signals or their error signals are processed using a correlation operation with the orthogonal frequency signatures to determine the dominant downstream crosstalk channels in the DSLs (106), and wherein the subset of downstream signals that correspond to the dominant crosstalk channels are processed using a crosstalk cancellation scheme to reduce crosstalk noise in the DSLs (106).

10. The apparatus (100) of claim 5, wherein the probing signals from the first transceivers comprise a plurality of error feedback signals from the CPEs (104), and wherein the crosstalk precoder (108, 200) processes the subset of probing signals to reduce crosstalk noise in the downstream.

**Patentansprüche**

1. Vorrichtung (100), **dadurch gekennzeichnet, dass** sie Folgendes umfasst:

eine Führungssteuerungsentität, VCE, (109, 202) in einer Vermittlungsstelle, CO, die mit mehreren ersten Sender/Empfängern an mehreren Einrichtungen am Kundenstandort, CPEs, (104) und mit mehreren zweiten Sender/Empfängern an der CO über mehrere entsprechende digitale Teilnehmerleitungen, DSLs, (106) gekoppelt ist und konfiguriert ist, mehrere Sondierungssignale zu verarbeiten, die mehrere Signaturen orthogonaler Frequenzen aus den ersten Sender/Empfängern, die den DSLs (106) entsprechen, umfassen, um mehrere dominante Aufwärtsübersprechkanäle in den DSLs (106) zu bestimmen; und eine Übersprechunterdrückungseinheit (114, 200), die mit der VCE (109, 202) und den zweiten Sender/Empfängern an der CO gekoppelt ist und konfiguriert ist, eine Teilmenge aus mehreren Signalen aus den ersten Sender/Empfängern, die den dominanten Übersprechkanälen entsprechen, zu verarbeiten, um das Übersprechrauschen in den DSLs (106) in der Aufwärtsrichtung zu reduzieren,
wobei jedes der Sondierungssignale in einem einzelnen Sync-Symbol in jeder der DSLs (106) übertragen wird.

2. Vorrichtung (100) nach Anspruch 1, wobei jede der Signaturen orthogonaler Frequenzen mehrere Töne umfasst und wobei die Länge $L$ der Signaturen orthogonaler Frequenzen in Tönen bestimmt ist, so dass jede der DSLs (106) eine eindeutige Frequenzsignatur aufweist und genug Signaturen wechselseitig orthogonaler Frequenzen für alle DSLs (106) vorhanden sind.

3. Vorrichtung (100) nach Anspruch 2, wobei die Länge der Signaturen orthogonaler Frequenzen $L$ in den Tönen gleich der kleinsten Potenz von zwei ist, die größer als oder gleich der Zahl der DSLs (106) $N$ ist, so dass $L = 2^{[\log_2 N]}$ ist, wobei [] eine Nächste-obere-Ganzzahl-Funktion ist.

4. Vorrichtung (100) nach einem der Ansprüche 1 bis 3, wobei die Sondierungssignale oder ihre Fehlersignale unter Verwendung einer Korrelationsoperation mit den Signaturen orthogonaler Frequenzen verarbeitet werden, um die dominanten Übersprechkanäle in den DSLs (106) zu bestimmen, und wobei die Teilmenge von Signalen, die den dominanten Übersprechkanälen entsprechen, unter Verwendung eines Übersprechunterdrückungsschemas verarbeitet werden, um Übersprechrauschen in den DSLs (106) zu reduzieren.

5. Vorrichtung (100), **dadurch gekennzeichnet, dass** sie Folgendes umfasst:

eine Führungssteuerungsentität, VCE, (109, 202) in einer Vermittlungsstelle, CO, die mit mehreren ersten Sender/Empfängern an mehreren Einrichtungen am Kundenstandort, CPEs, (104) und mit mehreren zweiten Sender/Empfängern an der CO über mehrere entsprechende digitale Teilnehmerleitungen, DSLs, (106) gekoppelt ist und konfiguriert ist, mehrere Sondierungssignale zu verarbeiten, die mehrere Signaturen orthogonaler Frequenzen aus den zweiten Sender/Empfängern, die den DSLs (106) entsprechen, umfassen, um mehrere dominante Abwärtsübersprechkanäle in den DSLs (106) zu bestimmen; und
eine Übersprechvorcodierungseinheit (108, 200), die mit der VCE (109, 202) und den zweiten Sender/Empfängern an der CO gekoppelt ist und konfiguriert ist, eine Teilmenge aus den mehreren Signalen aus den zweiten Sender/Empfängern, die den dominanten Übersprechkanälen entsprechen, zu verarbeiten, um das Übersprechrauschen in den DSLs (106) in der Abwärtsrichtung zu reduzieren,
wobei jedes der Sondierungssignale in einem einzelnen Sync-Symbol in jeder der DSLs (106) übertragen wird.

6. Vorrichtung (100) nach Anspruch 5, wobei die VCE (109, 202) mehrere Vorcodierungskoeffizienten der Übersprechvorcodierungseinheit (108, 200) aktualisiert, um die Übersprechvorcodierungseinheit zu trainieren, das Übersprechrauschen in mehreren Abwärtssignalen aus den zweiten Sender/Empfängern zu reduzieren, und wobei die mehreren Signale aus den ersten Sender/Empfängern mehrere Fehlerrückmeldungssignale umfassen, die verwendet werden, um die Übersprechvorcodierungseinheit zu trainieren.

7. Vorrichtung (100) nach Anspruch 5, wobei jede der Signaturen orthogonaler Frequenzen mehrere Töne umfasst und wobei die Länge $L$ der Signaturen orthogonaler Frequenzen in Tönen bestimmt ist, so dass jede der DSLs (106) eine eindeutige Frequenzsignatur aufweist und genug Signaturen wechselseitig orthogonaler Frequenzen für alle DSLs (106) vorhanden sind.

8. Vorrichtung (100) nach Anspruch 7, wobei die Länge der Signaturen orthogonaler Frequenzen $L$ in den Tönen gleich der kleinsten Potenz von zwei ist, die größer als oder gleich der Menge von DSLs (106) $N$ ist, so dass $L = 2^{[\log_2 N]}$ ist, wobei [] eine Nächste-obere-Ganzzahl-Funktion ist.

9. Vorrichtung (100) nach Anspruch 5, wobei die Sondierungssignale oder ihre Fehlersignale unter Verwendung einer Korrelationsoperation mit den Signaturen orthogonaler Frequenzen verarbeitet werden, um die dominanten Abwärtsübersprechkanäle in den DSLs (106) zu bestimmen, und wobei die Teilmenge von Abwärtssignalen, die den dominanten Übersprechkanälen entsprechen, unter Verwendung eines Übersprechunterdrückungsschemas verarbeitet werden, um Übersprechrauschen in den DSLs (106) zu reduzieren.

10. Vorrichtung (100) nach Anspruch 5, wobei die Sondierungssignale aus den ersten Sender/Empfängern mehrere Fehlerrückmeldungssignale aus den CPEs (104) umfassen und wobei die Übersprechvorcodierungseinheit (108, 200) die Teilmenge von Sondierungssignalen verarbeitet, um Übersprechrauschen in der Abwärtsrichtung zu reduzieren.

**Revendications**

1. Appareil (100) **caractérisé en ce qu'**il comprend :

   une entité de commande de vectorisation VCE (109, 202) dans un central CO couplée à une pluralité de premiers émetteurs-récepteurs dans une pluralité d'équipements d'usagers CPE (104) et à une pluralité de seconds émetteurs-récepteurs dans le central CO par l'intermédiaire d'une pluralité de lignes d'abonné numériques DSL correspondantes (106) et configurée pour traiter une pluralité de signaux de détection comprenant une pluralité de signatures de fréquences orthogonales provenant des premiers émetteurs-récepteurs qui correspondent aux lignes DSL (106) pour déterminer une pluralité de canaux à diaphonie dominante amont dans les lignes DSL (106) ; et
   un suppresseur de diaphonie (114, 200) couplé à l'entité VCE (109, 202) et aux seconds émetteurs-récepteurs dans le central CO et configuré pour traiter un sous-ensemble d'une pluralité de signaux depuis les premiers émetteurs-récepteurs qui correspondent aux canaux à diaphonie dominante pour réduire le bruit de diaphonie dans les lignes DSL (106) en amont,
   dans lequel chacun des signaux de détection est transmis dans un symbole de synchronisation unique dans chacune des lignes DSL (106).

2. Appareil (100) selon la revendication 1, dans lequel chacune des signatures de fréquences orthogonales comprend une pluralité de tonalités, et dans lequel la longueur $L$ des signatures de fréquences orthogonales dans les tonalités est déterminée de telle sorte que chacune des lignes DSL (106) ait une signature de fréquence unique et qu'il y ait suffisamment de signatures de fréquences mutuellement orthogonales pour toutes les lignes DSL (106).

3. Appareil (100) selon la revendication 2, dans lequel la longueur des signatures de fréquences orthogonales $L$ dans les tonalités est égale à la plus petite puissance de deux qui est supérieure ou égale à la quantité de lignes DSL (106) $N$, de telle sorte que $L = 2^{[\log_2 N]}$ où [ ] désigne une fonction de plafond.

4. Appareil (100) selon l'une quelconque des revendications 1 à 3, dans lequel les signaux de détection ou leurs signaux d'erreurs sont traités en utilisant une opération de corrélation avec les signatures de fréquences orthogonales pour déterminer les canaux à diaphonie dominante dans les lignes DSL (106), et dans lequel le sous-ensemble de signaux qui correspondent aux canaux à diaphonie dominante est traité en utilisant un plan de suppression de diaphonie pour réduire le bruit de diaphonie dans les lignes DSL (106).

5. Appareil (100) **caractérisé en ce qu'**il comprend :

   une entité de commande de vectorisation VCE (109, 202) dans un central CO couplée à une pluralité de premiers émetteurs-récepteurs dans une pluralité d'équipements d'usagers CPE (104) et à une pluralité de seconds émetteurs-récepteurs dans le central CO par l'intermédiaire d'une pluralité de lignes d'abonné numériques DSL correspondantes (106) et configurée pour traiter une pluralité de signaux de détection comprenant une pluralité de signatures de fréquences orthogonales provenant des seconds émetteurs-récepteurs qui correspondent aux lignes DSL (106) pour déterminer une pluralité de canaux à diaphonie dominante aval dans les lignes DSL (106) ; et
   un précodeur de diaphonie (108, 200) couplé à l'entité VCE (109, 202) et aux seconds émetteurs-récepteurs dans le central CO et configuré pour traiter un sous-ensemble d'une pluralité de signaux provenant des seconds émetteurs-récepteurs qui correspondent aux canaux à diaphonie dominante aval pour réduire le bruit de diaphonie dans les lignes DSL (106) en aval,
   dans lequel chacun des signaux de détection est transmis dans un symbole de synchronisation unique dans chacune des lignes DSL (106).

6. Appareil (100) selon la revendication 5, dans lequel l'entité VCE (109, 202) actualise une pluralité de coefficients de précodage du précodeur de diaphonie (108, 200) pour l'apprentissage du décodeur de diaphonie en vue de réduire le bruit de diaphonie dans une pluralité de signaux aval provenant des seconds émetteurs-récepteurs, et dans lequel une pluralité de signaux provenant des premiers émetteurs-récepteurs comprend une pluralité de signaux de retour d'erreurs qui sont utilisés pour l'apprentissage du précodeur de diaphonie.

7. Appareil (100) selon la revendication 5, dans lequel chacune des signatures de fréquences orthogonales comprend une pluralité de tonalités, et dans lequel la longueur $L$ des signatures de fréquences orthogonales dans les tonalités est déterminée de telle sorte que chacune des lignes DSL (106) ait une signature de fréquence unique et qu'il y ait suffisamment de signatures de fréquences mutuellement orthogonales pour toutes les lignes DSL (106).

8. Appareil (100) selon la revendication 7, dans lequel la longueur *L* des signatures de fréquences orthogonales dans les tonalités est égale à la plus petite puissance de deux qui est supérieure ou égale à la quantité de lignes DSL (106) *N,* de telle sorte que $L = 2^{[\log_2 N]}$ où [ ] désigne une fonction de plafond.

9. Appareil (100) selon la revendication 5, dans lequel les signaux de détection ou leurs signaux d'erreurs sont traités en utilisant une opération de corrélation avec les signatures de fréquences orthogonales pour déterminer les canaux à diaphonie dominante aval dans les lignes DSL (106), et dans lequel le sous-ensemble de signaux aval qui correspondent aux canaux à diaphonie dominante est traité en utilisant un plan de suppression de diaphonie pour réduire le bruit de diaphonie dans les lignes DSL (106).

10. Appareil (100) selon la revendication 5, dans lequel les signaux de détection provenant des premiers émetteurs-récepteurs comprennent une pluralité de signaux de retour d'erreurs depuis les équipements CPE (104), et dans lequel le précodeur de diaphonie (108, 200) traite le sous-ensemble de signaux de détection pour réduire le bruit de diaphonie en aval.

FIG.1

200

Line 1          Line 2          Line N

• • •

202

VCE

Line *a* | Line *b* | Line *c*

Partial Crosstalk Canceller

204

FIG. 2

300

Start

310

Receive a plurality of signals comprising a plurality of sync symbols on a plurality of corresponding lines

320

Divide the received sync symbol on each line into several tone groups corresponding to the frequency signature windows

330

Correlate the error signals in the tone groups in the received sync symbols with the orthogonal frequency signatures for each line other than the line corresponding to the received signal to determine the most dominant crosstalk channels for each line

340

Process the signals that correspond to the most dominant crosstalk channels for each of the lines to reduce the crosstalk noise in each of the lines

End

FIG. 3

400

```
          ┌─────────────┐
          │    Start    │
          └──────┬──────┘
                 │                              410
                 ▼
  ┌────────────────────────────────────────────────┐
  │ Determine the length of the orthogonal frequency signatures │
  │   based on the quantity of lines and that ensures sufficient │
  │                 frequency resolution            │
  └────────────────────┬───────────────────────────┘
                       │                        420
                       ▼
  ┌────────────────────────────────────────────────┐
  │ Define a plurality of orthogonal frequency signatures for a plurality of lines │
  └────────────────────┬───────────────────────────┘
                       │                        430
                       ▼
  ┌────────────────────────────────────────────────┐
  │  Send the defined orthogonal frequency signatures and the determined │
  │   length to a plurality of transceivers that correspond to the lines │
  └────────────────────┬───────────────────────────┘
                       │
                       ▼
               ┌─────────────┐
               │     End     │
               └─────────────┘
```

FIG. 4

FIG. 5

600

610 — I/O

604

602

Secondary
Storage

Processor

ROM — 606

RAM — 608

Network — 612

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009175156 A1

### Non-patent literature cited in the description

- **DANNY VAN BRUYSSEL.** *G.vector: Proposal for a frequency division multiplexing scheme for pilot sequences and sync-flags; C 265*

- F. vector: Frequency division multiplexing of pilot sequences and sync-flags. *ITU-T SG 15/Q4 contribution 08CC-043,* September 2008